# EUROPEAN PATENT APPLICATION

(11) **EP 4 645 269 A1**
(43) Date of publication of application: **05.11.2025**
(21) Application number: 23911572.8
(22) Date of filing: 05.12.2023
(51) Int. Cl.: G06V 40/10, G01J 5/48, G06T 7/00

(54) **IDENTIFICATION SYSTEM, IDENTIFICATION METHOD, AND PROGRAM**

(30) Priority: 26.12.2022 JP 2022208750
(71) Applicant: Panasonic Intellectual Property Management Co., Ltd., Kadoma-shi, Osaka 571-0057 (JP)
(72) Inventor: KOGA, Tatsuo, Kadoma-shi, Osaka 571-0057 (JP); ITOH, Kazuo, Kadoma-shi, Osaka 571-0057 (JP); URA, Kazuto, Kadoma-shi, Osaka 571-0057 (JP)
(74) Representative: Appelt, Christian W.
(86) International application number: PCT/JP2023/043433
(87) International publication number: WO 2024/142791

(57) **Abstract**

The problem is to contribute to identifying a person more accurately based on a thermal image. An identification system (1) includes an identifier (231). The identifier (231) identifies, based on a thermal image generated by an infrared camera (3) installed in a facility (10), a person corresponding to a person's image included in the thermal image. The identifier (231) acquires, based on the thermal image, an area of the person's image and at least one parameter selected from the group consisting of an amount of radiant heat and a body temperature, a build, a gait type, a gait speed, and a posture of the person. The identifier (231) identifies, based on the area of the person's image and the at least one parameter thus acquired and preregistered personal information about the person, the person corresponding to the person's image.

## Description

### Technical Field

The present disclosure generally relates to an identification system, an identification method, and a program, and more particularly relates to an identification system, an identification method, and a program, all of which are applicable to thermal images.

### Background Art

Patent Literature 1 discloses an air conditioner. The air conditioner includes a thermal image acquisition unit and a human recognizer. The human recognizer analyzes a thermal image acquired by the thermal image acquisition unit and recognizes a person by his or her height.

Recognizing a person simply by his or her height as in the air conditioner disclosed in Patent Literature 1 does not allow persons with the same height, for example, to be distinguished from each other, which is a problem with the known art.

### Citation List

### Patent Literature

Patent Literature 1: JP 2017-062108 A

### Summary of Invention

In view of the foregoing background, it is therefore an object of the present disclosure to provide an identification system, an identification method, and a program contributing to identifying a person more accurately based on a thermal image.

An identification system according to an aspect of the present disclosure includes an identifier. The identifier identifies, based on a thermal image generated by an infrared camera installed in a facility, a person corresponding to a person's image included in the thermal image. The identifier acquires, based on the thermal image, an area of the person's image and at least one parameter selected from the group consisting of an amount of radiant heat and a body temperature, a build, a gait type, a gait speed, and a posture of the person. The identifier identifies, based on the area of the person's image and the at least one parameter thus acquired and preregistered personal information about the person, the person corresponding to the person's image.

An identification method according to another aspect of the present disclosure is designed to be performed by a computer system. The identification method is a method for identifying, based on a thermal image generated by an infrared camera installed in a facility, a person corresponding to a person's image included in the thermal image. The identification method includes an acquiring step and an identifying step. The acquiring step includes acquiring, based on the thermal image, an area of the person's image and at least one parameter selected from the group consisting of an amount of radiant heat and a body temperature, a build, a gait type, a gait speed, and a posture of the person. The identifying step includes identifying, based on the area of the person's image and the at least one parameter thus acquired and preregistered personal information about the person, the person corresponding to the person's image.

A program according to still another aspect of the present disclosure is designed to cause the computer system to perform the identification method described above.

### Brief Description of Drawings

[FIG. 1] FIG. 1 is a block diagram showing a configuration for an identification system according to an exemplary embodiment;
[FIG. 2] FIG. 2 is a schematic representation illustrating an exemplary thermal image generated by the identification system;
[FIG. 3] FIG. 3 is a schematic representation illustrating another exemplary thermal image generated by the identification system; and
[FIG. 4] FIG. 4 is a sequence chart showing an exemplary procedure of operation of the identification system.

### Description of Embodiments

A preferred embodiment of the present disclosure will now be described in detail with reference to the accompanying drawings. In the following description of embodiments, constituent elements illustrated on multiple drawings and having the same feature will be designated by the same reference sign and description thereof will be omitted herein to avoid redundancy. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. It should also be noted that the embodiments (including their variations) to be described below may be adopted in combination as appropriate.

The drawings to be referred to in the following description of embodiments are all schematic representations. Thus, the ratio of the dimensions (including thicknesses) of respective constituent elements illustrated on the drawings does not always reflect their actual dimensional ratio.

As used herein, if two things "are perpendicular to each other (or cross each other at right angles)," this expression refers to not only a situation where the angle formed between the two things is exactly equal to 90 degrees but also a situation where the difference of the angle formed between the two things from 90 degrees falls within a certain tolerance range. That is to say, the angle formed between the two things that are perpendicular to each other falls within the range of 90 degrees plus some tolerance (of 10 degrees or less, for example). That is to say, the phrase "perpendicular to" as used herein refers to a situation where the angle formed between the two things is equal to or greater than 80 degrees and equal to or less than 100 degrees. Note that if something is "parallel to" something else, this phrase herein refers to not only a situation where these two things never intersect with each other in a strict sense of the word but also a situation where these two things intersect with each other within a range with a certain difference. For example, the phrase "parallel to" as used herein also refers to a situation where the tilt angle defined by one thing with respect to the other is equal to or less than 10 degrees. That is to say, the phrase "parallel to" as used herein may also refer to a situation where the angle formed between one thing and the other thing is equal to or greater than -10 degrees and equal to or less than 10 degrees.

### (1) Overview

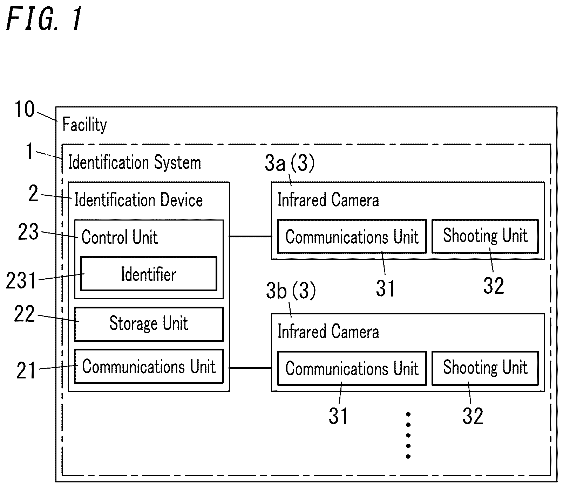

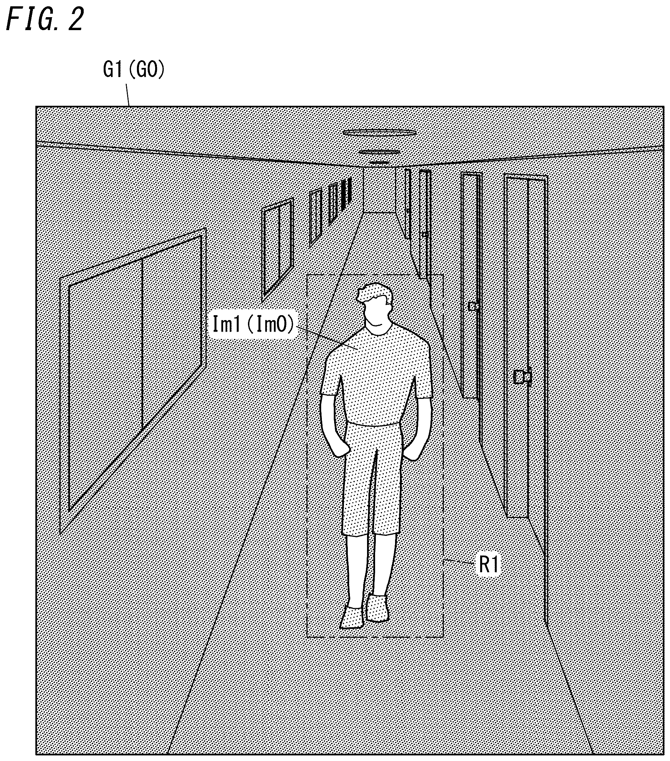

First, an overview of an identification system 1 according to this embodiment will now be described with reference to FIGS. 1 and 2.

As shown in FIG. 1, the identification system 1 is provided for a facility 10. As used herein, examples of the "facility" include dwelling facilities for use for housing purposes and non-dwelling facilities such as stores (tenants' stores), offices (office buildings), welfare facilities, educational institutions, hospitals, and factories. Examples of the non-dwelling facilities further include restaurants, amusement centers, hotels, inns, kindergartens, daycare facilities, and community centers. That is to say, the facility 10 may be a dwelling facility such as a multifamily dwelling house (i.e., a so-called "mansion" in Japan) or a non-dwelling facility such as an office, whichever is appropriate. Alternatively, the facility 10 may also be a combination of a dwelling facility and a non-dwelling facility. For example, the facility 10 may include stores on lower floors thereof and dwelling units on upper floors thereof. In this embodiment, the facility 10 is supposed to be an office.

The identification system 1 includes an identification device 2 and a plurality of infrared cameras 3.

Each of the infrared cameras 3 is installed, for example, on a building component, such as a celling, or a wall, of the facility 10. Each of the infrared cameras 3 generates a thermal image G0.

The identification device 2 includes an identifier 231.

The identifier 231 identifies, based on the thermal image G0 generated by any one of the infrared cameras 3, a person corresponding to a person's image Im0 (refer to FIG. 2) included in the thermal image G0.

The identifier 231 acquires, based on the thermal image G0, the area of the person's image Im0 and at least one parameter selected from the group consisting of the amount of the radiant heat and the body temperature, build, gait type, gait speed, and posture of the person. The identifier 231 identifies, based on the area of the person's image Im0 and the at least one parameter thus acquired and preregistered personal information about him or her, the person corresponding to the person's image Im0.

The identification system 1 (the identification device 2) according to this embodiment identifies a person corresponding to the person's image Im0 based on the area of the person's image Im0, thus identifying a person more accurately than in a situation where a person is identified by, for example, his or her height (i.e., the height of the person's image Im0) which is one-dimensional information. Also, the identification system 1 according to this embodiment may identify a person more accurately by identifying a person corresponding to the person's image Im0 based on not only the area of the person's image Im0 but also the at least one parameter as well.

### (2) Details

Next, a detailed configuration of the identification system 1 according to this embodiment will be described with reference to FIGS. 1-3.

### (2.1) Configuration for identification system

As described above, the identification system 1 according to this embodiment is introduced into an office as an exemplary facility 10. As shown in FIG. 1, the identification system 1 includes an identification device 2, and a plurality of (e.g., two in the example illustrated in FIG. 1) infrared cameras 3.

The identification system 1 is a system for identifying, in the office, employees (who are exemplary persons) who fall within the shooting ranges of the plurality of infrared cameras 3 installed at multiple points in the office. The identification system 1 may learn, by identifying employees who fall within the shooting ranges of the infrared cameras 3, about the positions of those employees, the quantity of communication among the employees, the operating status of the facility in each department (i.e., to which the employees belong), and the performance of the employees. Also, the identification system 1 may also collect information, by using the infrared cameras 3, about their thermal sensations indicating whether the employees are sensitive to heat or cold and their degrees of fitness, for example.

### (2.2) Infrared cameras

The plurality of infrared cameras 3 includes, as shown in FIG. 1, an infrared camera 3a (a first infrared camera) for generating a thermal image G0 (as a first thermal image G1) and an infrared camera 3b (a second infrared camera) for generating another thermal image G0 (as a second thermal image G2). The infrared camera 3a and the infrared camera 3b are provided at different positions and installed to capture a person, present at a predetermined location, within the same shooting range from different angles. The infrared camera 3a and the infrared camera 3b have the same configuration. In the following description, if the infrared camera 3a and the infrared camera 3b do not need to be distinguished from each other, the infrared camera 3a and the infrared camera 3b will be hereinafter simply referred to as "infrared cameras 3" collectively.

The infrared cameras 3 each include a communications unit 31 and a shooting unit 32.

The communications unit 31 includes a communications interface configured to be ready to communicate with a communications unit 21 of the identification device 2 (to be described later). As used herein, the phrase "to be ready to communicate" means being able to transmit and receive information either directly or indirectly via a network or a repeater, for example, by an appropriate wired or wireless communication method.

The communications unit 31 transmits a thermal image G0, generated by the shooting unit 32, to the identification device 2.

The shooting unit 32 detects an infrared ray to generate a two-dimensional thermal image G0. The shooting unit 32 includes an optical component such as a lens and a thermal image sensor. As used herein, the "thermal image" refers to thermal image data and may include thermal images in the forms of a still picture (frame), a moving picture, and a stop-motion picture. In this embodiment, the thermal image G0 acquired by the shooting unit 32 is supposed to be a moving picture including a plurality of frames.

The thermal image G0 generated by the shooting unit 32 changes the display colors of pixels depending on the surface temperature of the target object. In the thermal image G0 generated by the shooting unit 32, the higher the surface temperature of a part of the object represented by a pixel is, the closer to the color white the display color of the pixel may be, for example. On the other hand, the lower the surface temperature of a part of the object represented by a pixel is, the closer to the color black the display color of the pixel may be, for example.

The shooting range of the infrared camera 3a according to this embodiment is aligned with (i.e., parallel to) a direction in which a passage such as a hallway extends, i.e., a traveling direction in which a person is traveling along the passage. In other words, the orientation that the lens of the infrared camera 3a faces is aligned with the traveling direction of the person. Therefore, the infrared camera 3a may shoot, from a predetermined position on the passage, the person, traveling along the passage, from his/her front or back.

FIG. 2 is a schematic representation illustrating an example of the first thermal image G1 generated by the infrared camera 3a. Note that an installation position of the infrared camera 3a is not limited to, for example, the passage. The infrared camera 3a only needs to be installed at a position from which a person may be shot generally from his/her front or back. The first thermal image G1 may include a person's image Im1 generated by shooting the person from his/her front or back.

The shooting range of the infrared camera 3b according to this embodiment extends along a direction intersecting, e.g., at right angles, with the direction in which a passage such as the hallway extends, i.e., the traveling direction of the person who is traveling along the passage. In other words, the lens orientation of the infrared camera 3b intersects with the person's traveling direction. Therefore, the infrared camera 3b may shoot laterally, from a predetermined position on the passage, the person who is traveling along the passage. The infrared camera 3b according to this embodiment is installed to capture, within the shooting range of the infrared camera 3b, a person who falls within the shooting range of the infrared camera 3a. That is to say, the infrared camera 3a and the infrared camera 3b are installed to be able to shoot a person, present at a predetermined location, from different angles and at the same timing.

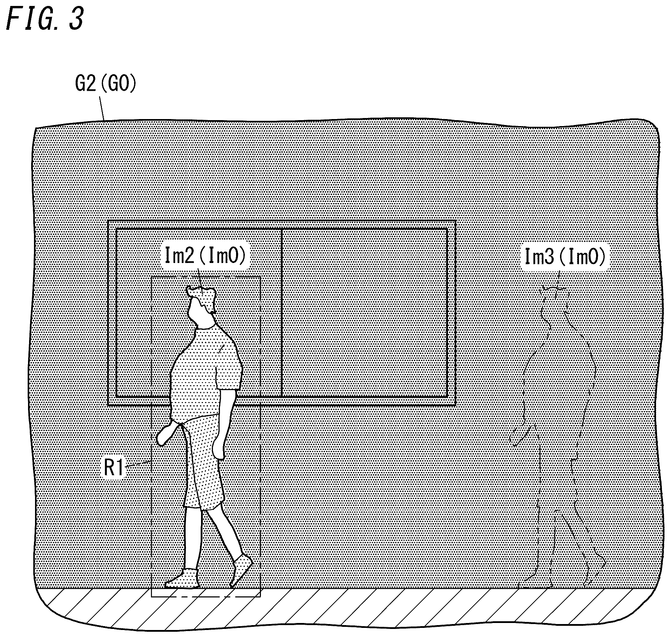

FIG. 3 is a schematic representation illustrating an exemplary second thermal image G2 generated by the infrared camera 3b. Note that an installation position of the infrared camera 3b is not limited to, for example, the passage. The infrared camera 3b only needs to be installed at a position from which a person may be shot generally from his/her side (i.e., from an angle different from his/her front or back). The second thermal image G2 may include, for example, person's images Im2 and Im3 generated by shooting the person laterally. The person's images Im2 and Im3 are the person's images Im0 shot along the time series and images that allow for determining the gait speed of a person who falls within the shooting range of the infrared camera 3b.

In the following description, if the first thermal image G1 and the second thermal image G2 do not need to be distinguished from each other, the first thermal image G1 and the second thermal image G2 will be hereinafter simply referred to as "thermal image G0" collectively. Also, if the person's image Im1 and the person's image Im2 do not need to be distinguished from each other, the person's image Im1 and the person's image Im2 will be hereinafter simply referred to as the "person's images Im0" collectively.

### (2.3) Identification device

The identification device 2 includes, as a principal constituent element, a computer system including one or more processors and one or more memories. The functions of the respective components of the identification device 2 are performed by making the one or more processors execute a program stored in the memory. The program may be stored in advance in the memory. Alternatively, the program may also be downloaded via a telecommunications line such as the Internet or distributed after having been stored in a non-transitory storage medium such as a memory card.

The identification device 2 may be provided in, for example, a caretaker's room in an office building. The identification device 2 may be implemented as, for example, a server device. As shown in FIG. 1, the identification device 2 includes a communications unit 21, a storage unit 22, and a control unit 23.

The communications unit 21 includes a communications interface configured to be ready to communicate with the respective communications units 31 of the infrared cameras 3. The communications unit 21 receives thermal images G0 from the plurality of infrared cameras 3.

The storage unit 22 may be a semiconductor memory such as a read-only memory (ROM), a random-access memory (RAM), or an electrically erasable programmable read-only memory (EEPROM). Note that the storage unit 22 does not have to be a semiconductor memory but may also be a hard disk drive, for example.

The storage unit 22 stores personal information for use to identify a person who uses the facility 10. As used herein, the "personal information" is a piece of information in which a number such as an employee number and an individual name is associated with parameters for identifying a given person. Examples of the parameters include various pieces of information such as the area of the person's image, the amount of the radiant heat, and the body temperature, build, gait type, gait speed, and posture of the person.

The personal information stored may also be information about the body surface area instead of information about the area of the person's image. The information about the body surface area is, for example, a piece of information about a planar area in a situation where the person's body is viewed from his or her front or back.

The information about the amount of the radiant heat is a piece of information acquired by shooting, in advance, a person with a device such as the infrared camera 3. The amount of the radiant heat may be determined based on the difference in temperature between a region covering the body of the person and a region surrounding the person in the thermal image G0. The information about the build includes information about, for example, the height, shoulder width, waist height, and length of limbs of the person. The information about the gait type includes pieces of information about his or her stride length, his or her foot strike rate, how the person swings his or her shoulders or arms while walking, and how his or her spine is curved while he or she is walking. The information about the posture includes information about, for example, the degree of curvature of his or her spine.

The control unit 23 includes an identifier 231.

As described above, the identifier 231 identifies, based on the thermal image G0 generated by any one of the infrared cameras 3, a person corresponding to the person's image Im0 included in the thermal image G0. Specifically, the identifier 231 acquires, based on the thermal image G0, the area of the person's image Im0 and at least one parameter selected from the group consisting of the amount of the radiant heat and the body temperature, build, gait type, gait speed, and posture of the person. Then, the identifier 231 identifies, based on the area of the person's image Im0 and the at least one parameter thus acquired and his or her personal information stored in the storage unit 22, a person corresponding to the person's image Im0.

The identifier 231 according to this embodiment detects, by performing object detection processing on the thermal image G0, a region R1 covering the person's image Im0 from the thermal image G0. Then, the identifier 231 acquires, by using the region R1 thus detected, the area of the person's image Im0 and at least one parameter selected from the group consisting of the amount of the radiant heat and the body temperature, build, gait type, gait speed, and posture of the person.

The identifier 231 according to this embodiment performs difference detection processing as the object detection processing. The difference detection processing is, for example, the processing of detecting the region R1 using a background difference or the processing of detecting the region R1 by deriving the magnitude of motion of the person's image Im0 based on an interframe difference.

The identification device 2 according to this embodiment performs the object detection processing to detect the region R1 covering person's image Im0, thus making it easier to perform another type of image analysis processing such as image segmentation and skeleton estimation processing.

The identifier 231 according to this embodiment detects the person's image Im0 included in the thermal image G0 by performing at least one of the image segmentation or the skeleton estimation processing on the region R1 of the thermal image G0. Then, the identifier 231 acquires, using the person's image Im0 thus detected, the area of the person's image Im0 and at least one parameter selected from the group consisting of the amount of the radiant heat and the body temperature, build, gait type, gait speed, and posture of the person.

As used herein, the "image segmentation" refers to the processing of determining, on a pixel-by-pixel basis, whether or not a given pixel forms part of the person's image Im0 (i.e., a person), whether or not a given pixel forms part of a background, and whether or not a given pixel forms part of an object other than the person. The identifier 231 performs the image segmentation using a learned model generated by machine learning. The leaned model is generated, for example, by supervised learning using a plurality of supervisor data. The plurality of supervisor data may be, for example, a plurality of thermal images G0 generated by shooting a situation where any person is present within the shooting range. The identifier 231 uses the thermal image G0 generated by the infrared camera(s) 3 as input for the learned model, thus acquiring, as output of the learned model, information indicating whether or not any person is present within the shooting range (i.e., the thermal image G0). Note that an algorithm for the machine learning may be implemented, for example, as a neural network.

As used herein, the "skeleton estimation processing" refers to the processing of detecting, from the region R1 of the thermal image G0, main parts of the person's body such as the face, neck, shoulders, hands, and legs of the person to estimate, by connecting these main body parts thus detected, the skeleton of the person. The identifier 231 performs the skeleton estimation processing using a learned model generated by machine learning. The leaned model is generated, for example, by supervised learning using a plurality of supervisor data. The plurality of supervisor data may be, for example, a plurality of thermal images G0 generated by shooting a situation where any person is present within the shooting range. The identifier 231 uses the thermal image G0 generated by the infrared camera(s) 3 as input for the learned model, thus acquiring, as output of the learned model, information indicating whether or not any person is present within the shooting range (i.e., the thermal image G0). Note that an algorithm for the machine learning may be implemented, for example, as a neural network.

The identification device 2 according to this embodiment may detect the person's image Im0 more accurately by performing at least one of the image segmentation or the skeleton estimation processing on the region R1 of the thermal image G0.

Note that the identifier 231 does not have to perform at least one of the image segmentation or the skeleton estimation processing on the region R1. Alternatively, the identifier 231 may also perform at least one of the image segmentation or the skeleton estimation processing on the entire thermal image G0.

The identifier 231 according to this embodiment detects the person's image Im1 from the first thermal image G1 shot by the infrared camera 3a and also detects the person's images Im2 and Im3 from the second thermal images G2 shot by the infrared camera 3b.

The identifier 231 determines the area of the person's image Im1 using the person's image Im1 thus detected. The area of the person's image Im1 may also be the total number of pixels that the identifier 231 has determined to form the person's image Im1.

Also, the identifier 231 acquires, using the person's image Im0 thus detected, at least one parameter selected from the group consisting of the amount of the radiant heat and the body temperature, build, gait type, gait speed, and posture of the person.

The identifier 231 determines, based on the temperature indicated by the person's image Im0, the body temperature of the person corresponding to the person's image Im0. Also, the identifier 231 calculates the amount of the radiant heat based on the difference in temperature between the person's image Im0 and a region surrounding the person's image Im0 in the thermal image G0.

Also, the identifier 231 determines the build of a person corresponding to the person's image Im0 by calculating, by using the person's image Im0 thus detected, the height, shoulder width, waist height, and length of limbs of the person.

The identifier 231 according to this embodiment acquires, based on the second thermal image G2 generated by the infrared camera 3b (the second infrared camera), at least one parameter selected from the group consisting of the gait type, gait speed, and posture of the person. That is to say, the identifier 231 acquires, based on the first thermal images G1 and the second thermal image G2, the area of the person's image Im1 and at least one parameter selected from the group consisting of the gait type, gait speed, and posture of the person.

The identifier 231 determines, for example, based on the first thermal image G1 generated by shooting a person from his/her front or back, how the person swings his or her shoulders while walking. Also, the identifier 231 determines, based on the second thermal image G2 generated by shooting a person laterally, his or her stride length, his or her foot strike rate, how the person swings his or her arms while walking, and how his or her spine is curved while he or she is walking. The identifier 231 identifies, based on pieces of information about his or her stride length, his or her foot strike rate, how the person swings his or her shoulders or hands while walking, and how his or her spine is curved while he or she is walking thus determined, the gait type of a person corresponding to the person's image Im0 included in the thermal image G0.

The identifier 231 identifies, based on the person's images Im2 and Im3 included in the second thermal images G2 generated by the infrared camera 3b, the gait speed of a person corresponding to the person's image Im0. Also, the identifier 231 identifies, based on the person's image Im0 included in the second thermal image G2 generated by the infrared camera 3b, the posture of a person corresponding to the person's image Im0.

The identification device 2 according to this embodiment uses the plurality of thermal images G0 generated by two infrared cameras 3 provided at different positions, thus acquiring the area of the person's image Im0 and at least one parameter selected from the group consisting of the gait type, gait speed, and posture of the person.

### (3) Operation of identification system

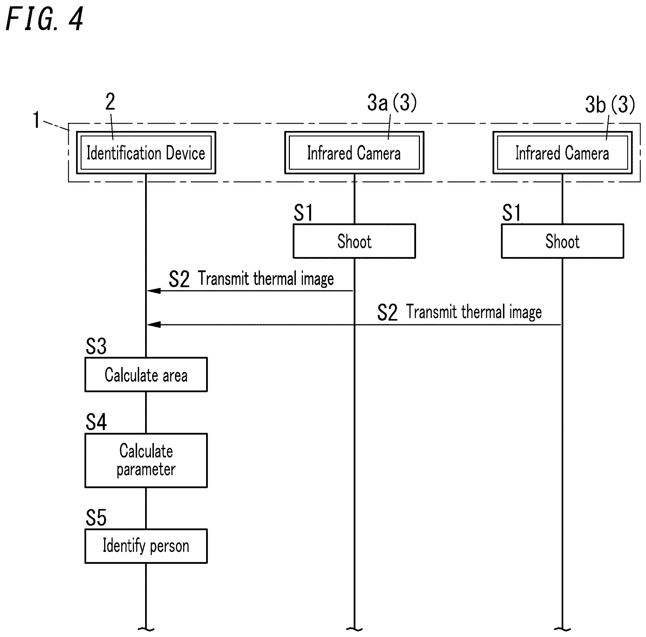

Next, an exemplary operation of the identification system 1 will be described with reference to FIG. 4.

First, each of the two (plurality of) infrared cameras 3 generates (shoots) (in S1) a thermal image G0 and transmits (in S2) the thermal image G0 thus generated to the identification device 2.

Based on the thermal image G0 thus received, the identification device 2 detects a person's image Im0 I included in the thermal image G0 and calculates (in S3) the area of the person's image Im0.

Next, the identification device 2 acquires (calculates) (in S4), based on the thermal image G0 thus received, at least one parameter selected from the group consisting of the amount of the radiant heat and the body temperature, build, gait type, gait speed, and posture of the person.

Finally, the identification device 2 identifies (in S5), based on the area of the person's image Im0, at least one parameter selected from the group consisting of the amount of the radiant heat and the body temperature, build, gait type, gait speed, and posture of the person thus acquired, and personal information, a person corresponding to the person's image Im0 included in the thermal image G0.

Note that the flowchart shown in FIG. 4 shows only an exemplary procedure and should not be construed as limiting. Optionally, the processing steps shown in FIG. 4 may be performed in a different order from the illustrated one, some of the processing steps shown in FIG. 4 may be omitted as appropriate, and/or an additional processing step may be performed as needed.

### (4) Variations

Next, variations of the exemplary embodiment will be enumerated one after another.

The functions of the identification system 1 (identification device 2) according to this embodiment may also be implemented as, for example, an identification method, a (computer) program, or a non-transitory storage medium on which the program is stored. An identification method according to an aspect is performed by a computer system. The identification method is a method for identifying, based on a thermal image G0 generated by an infrared camera 3 installed in a facility 10, a person corresponding to a person's image Im0 included in the thermal image G0. The identification method includes an acquiring step and an identifying step. The acquiring step includes acquiring, based on the thermal image G0, the area of the person's image Im0 and at least one parameter selected from the group consisting of the amount of radiant heat and the body temperature, build, gait type, gait speed, and posture of the person. The identifying step includes identifying, based on the area of the person's image Im0 and the at least one parameter thus acquired and preregistered personal information about him or her, the person corresponding to the person's image Im0. A program according to another aspect is designed to cause one or more processors to perform the identification method described above.

The identification system 1 according to the present disclosure or the agent that performs the identification method according to the present disclosure includes a computer system. The computer system may include a processor and a memory as principal hardware components thereof. The computer system performs the functions of the identification system 1 according to the present disclosure or serves as the agent that performs the identification method according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the plurality of functions of the identification system 1 are integrated together in a single housing. However, this is not an essential configuration for the identification system 1. Alternatively, those constituent elements of the identification system 1 may be distributed in multiple different housings. Still alternatively, at least some functions of the identification system 1 (e.g., some functions of the identification device 2) may be implemented as a cloud computing system as well.

Conversely, at least some functions of the identification system 1 which are distributed in multiple devices according to the embodiment described above may be aggregated together within a single housing. For example, some functions of the identification system 1 which are distributed in the identification device 2 and the infrared cameras 3 in the embodiment described above may be aggregated together within a single housing.

The identification system 1 only needs to include at least the identifier 231. Although the identification system 1 according to the exemplary embodiment includes a plurality of infrared cameras 3 as an example, the identification system 1 may include only one infrared camera 3.

In the embodiment described above, the identification device 2 is installed inside the facility 10 as an example. Alternatively, the identification device 2 may also be installed outside the facility 10. That is to say, part of the identification system 1 may be provided outside the facility 10.

In the embodiment described above, a situation where the identifier 231 performs the difference detection processing as the object detection processing is exemplified. However, the identifier 231 may also perform the object detection processing using a learned model generated by machine learning. The learned model is, for example, generated by supervised learning using a plurality of supervisor data. The plurality of supervisor data may be, for example, the plurality of thermal images G0 generated by shooting a situation where any person is present within the shooting range. The identifier 231 uses the thermal image G0 generated by the infrared camera(s) 3 as input for the learned model, thus acquiring, as output of the learned model, information indicating whether or not any person is present within the shooting range (as the thermal image G0). Note that an algorithm for the machine learning may be implemented, for example, as a neural network.

In the embodiment described above, the algorithm of machine learning is supposed to be a neural network as an example. However, the machine learning algorithm does not have to be the neural network but may also be, for example, extreme gradient boosting (XGB) regression, random forest, decision tree, logistic regression, support vector machine (SVM), naive Bayes classifier, or k-nearest neighbors method. Alternatively, the machine learning algorithm may also be a Gaussian mixture model (GMM) or k-means clustering, for example.

Optionally, the learned model may be updated by performing additional learning.

The identification system 1 may also identify a person corresponding to the person's image Im0 by using a body surface area instead of the area of the person's image Im0. The body surface area may be a planar area in a situation where the person's body is viewed from his or her front or back. The identification system 1 calculates, for example, the body surface area corresponding to the person's image Im0 based on the area of the person's image Im0 and distance information. As used herein, the "distance information" includes, for example, a piece of information about the distance between the infrared camera(s) 3 and the floor (or a predetermined position).

### (Recapitulation)

As can be seen from the foregoing description, an identification system (1) according to a first aspect includes an identifier (231). The identifier (231) identifies, based on a thermal image (G0) generated by an infrared camera (3) installed in a facility (10), a person corresponding to a person's image (Im0) included in the thermal image (G0). The identifier (231) acquires, based on the thermal image (G0), an area of the person's image (Im0) and at least one parameter selected from the group consisting of an amount of radiant heat and a body temperature, a build, a gait type, a gait speed, and a posture of the person. The identifier (231) identifies, based on the area of the person's image (Im0) and the at least one parameter thus acquired and preregistered personal information about the person, the person corresponding to the person's image (Im0).

This aspect enables the identification system (1) to identify a person corresponding to the person's image (Im0) based on the area of the person's image (Im0), thus allowing for identifying the person more accurately than in a situation where the person is identified by, for example, his or her height which is one-dimensional information. Also, this aspect enables the identification system (1) to identify a person corresponding to the person's image (Im0) based on not only the area of the person's image (Im0) but also at least one parameter as well, thus allowing for identifying the person even more accurately.

In an identification system (1) according to a second aspect, which may be implemented in conjunction with the first aspect, the identifier (231) detects, by performing object detection processing on the thermal image (GO), a region (R1) covering the person's image (Im0) from the thermal image (G0). The identifier (231) acquires, using the region (R1) thus detected, the area of the person's image (Im0) and the at least one parameter.

According to this aspect, detecting the region (R1) covering person's image (Im0) by performing object detection processing makes it easier to perform another type of image analysis processing such as image segmentation and skeleton estimation processing.

In an identification system (1) according to a third aspect, which may be implemented in conjunction with the first or second aspect, the identifier (231) detects the person's image (Im0) included in the thermal image (G0) by performing at least one of image segmentation or skeleton estimation processing on the thermal image (G0). The identifier (231) acquires the area of the person's image (Im0) and the at least one parameter using the person's image (Im0) thus detected.

This aspect allows for detecting the person's image (Im0) more accurately by performing at least one of image segmentation or skeleton estimation processing on the thermal image (G0).

In an identification system (1) according to a fourth aspect, which may be implemented in conjunction with any one of the first to third aspects, the infrared camera (3) includes a plurality of infrared cameras (3). The plurality of infrared cameras (3) includes a first infrared camera (an infrared camera 3a) for generating a first thermal image (G1) and a second infrared camera (an infrared camera 3b) provided at different position from the first infrared camera, for generating a second thermal image (G2). The identifier (231) acquires, based on the first thermal image (G1) and the second thermal image (G2), the area of the person's image (Im0) and the at least one parameter selected from the group consisting of the gait type, the gait speed, and the posture of the person.

According to this aspect, using the plurality of thermal images (G0) generated by two infrared cameras (3) provided at different positions allows the identification system (1) to acquire the area of the person's image (Im0) and at least one parameter selected from the group consisting of the gait type, gait speed, and posture of the person.

An identification system (1) according to a fifth aspect, which may be implemented in conjunction with any one of the first to third aspects, further includes the infrared camera (3).

According to this aspect, the infrared camera (3) does not need to be provided separately.

Note that the constituent elements according to the second to fifth aspects are not essential constituent elements for the identification system (1) but may be omitted as appropriate.

An identification method according to a sixth aspect is designed to be performed by a computer system. The identification method is a method for identifying, based on a thermal image (G0) generated by an infrared camera (3) installed in a facility (10), a person corresponding to a person's image (Im0) included in the thermal image (G0). The identification method includes an acquiring step and an identifying step. The acquiring step includes acquiring, based on the thermal image (GO), an area of the person's image (Im0) and at least one parameter selected from the group consisting of an amount of radiant heat and a body temperature, a build, a gait type, a gait speed, and a posture of the person. The identifying step includes identifying, based on the area of the person's image (Im0) and the at least one parameter thus acquired and preregistered personal information about the person, the person corresponding to the person's image (Im0).

This aspect enables a person corresponding to the person's image (Im0) to be identified based on the area of the person's image (Im0), thus allowing for identifying the person more accurately than in a situation where the person is identified by, for example, his or her height which is one-dimensional information. Also, this aspect enables a person corresponding to the person's image (Im0) to be identified based on not only the area of the person's image (Im0) but also at least one parameter as well, thus allowing for identifying the person even more accurately.

A program according to a seventh aspect is designed to cause the computer system to perform the identification method according to the sixth aspect.

This aspect enables a person corresponding to the person's image (Im0) to be identified based on the area of the person's image (Im0), thus allowing for identifying the person more accurately than in a situation where the person is identified by, for example, his or her height which is one-dimensional information. Also, this aspect enables a person corresponding to the person's image (Im0) to be identified based on not only the area of the person's image (Im0) but also at least one parameter as well, thus allowing for identifying the person even more accurately.

### Reference Signs List

- 1: Identification System
- 10: Facility
- 231: Identifier
- 3: Infrared Camera
- 3a: Infrared Camera (First Infrared Camera)
- 3b: Infrared Camera (Second Infrared Camera)
- G0: Thermal Image
- G1: First Thermal Image
- G2: Second Thermal Image
- Im0: Person's Image
- R1: Region

## Claims

1. An identification system comprising
an identifier configured to identify, based on a thermal image generated by an infrared camera installed in a facility, a person corresponding to a person's image included in the thermal image,
the identifier being configured to:
acquire, based on the thermal image, an area of the person's image and at least one parameter selected from the group consisting of an amount of radiant heat and a body temperature, a build, a gait type, a gait speed, and a posture of the person; and
identify, based on the area of the person's image and the at least one parameter thus acquired and preregistered personal information about the person, the person corresponding to the person's image.

2. The identification system of claim 1, wherein
the identifier is configured to detect, by performing object detection processing on the thermal image, a region covering the person's image from the thermal image and acquire, using the region thus detected, the area of the person's image and the at least one parameter.

3. The identification system of claim 1, wherein
the identifier is configured to detect the person's image included in the thermal image by performing at least one of image segmentation or skeleton estimation processing on the thermal image and acquire the area of the person's image and the at least one parameter using the person's image thus detected.

4. The identification system of claim 1, wherein
the infrared camera includes a plurality of infrared cameras,
the plurality of infrared cameras includes a first infrared camera configured to generate a first thermal image and a second infrared camera provided at different position from the first infrared camera and configured to generate a second thermal image, and
the identifier is configured to acquire, based on the first thermal image and the second thermal image, the area of the person's image and the at least one parameter selected from the group consisting of the gait type, the gait speed, and the posture of the person.

5. The identification system of claim 1, further comprising the infrared camera.

6. An identification method designed to be performed by a computer system to identify, based on a thermal image generated by an infrared camera installed in a facility, a person corresponding to a person's image included in the thermal image, the identification method comprising:
an acquiring step including acquiring, based on the thermal image, an area of the person's image and at least one parameter selected from the group consisting of an amount of radiant heat and a body temperature, a build, a gait type, a gait speed, and a posture of the person; and
an identifying step including identifying, based on the area of the person's image and the at least one parameter thus acquired and preregistered personal information about the person, the person corresponding to the person's image.

7. A program designed to cause the computer system to perform the identification method of claim 6.
